# FASCICULE DE BREVET EUROPEEN

(11) **EP 0 678 267 B1**
(45) Date de publication et mention de la délivrance du brevet: **09.07.1997**
(21) Numéro de dépôt: 95400825.6
(22) Date de dépôt: 12.04.1995
(51) Int. Cl.: A47J 31/54

(54) **Chaudière pour machine à café du type "espresso"**
Heisswasserbereiter für "Espresso"-Kaffeemaschinen
Boiler for coffee machine of the "espresso" type

(30) Priorité: 19.04.1994 FR 9404665
(43) Date de publication de la demande: 25.10.1995
(73) Titulaire: MOULINEX S.A., 75008 Paris (FR)
(72) Inventeur: Clech, Jean-René, F-61000 Saint Germain du Corbeis (FR); Landais, Francis, décédé (FR); Landais, Joel, F-61250 Conde sur Sarthe (FR)
(74) Mandataire: Busquets, Jean-Pierre

(56) Documents cités:
- EP-A- 0 622 041
- DE-U- 9 010 843
- DE-U- 9 112 554

## Description

La présente invention concerne une chaudière pour machine à café du type "espresso", comportant un corps métallique qui définit une chambre et qui comprend une partie supérieure formant un chapeau à rebord périphérique conformé en une gouttière et une partie inférieure formant une coupelle qui est liée de manière étanche au rebord périphérique du chapeau, un tube d'alimentation en eau qui est monté plongeant dans la chambre en étant solidaire du chapeau du corps et qui est relié à une pompe d'alimentation externe, une résistance électrique de chauffage destinée à chauffer l'eau admise dans la chambre par ledit tube, une conduite d'évacuation de l'eau qui est disposée verticalement dans la chambre en étant solidaire du fond de la coupelle du corps et dont l'extrémité inférieure débouche du fond de la coupelle, et une soupape qui est logée dans la conduite d'évacuation de l'eau et qui est adaptée à autoriser l'écoulement de l'eau chaude hors de ladite conduite uniquement lorsque la pression de l'eau dans la chambre dépasse un seuil donné.

Dans une chaudière connue de ce genre, utilisée dans une cafetière "espresso", le chapeau et la coupelle du corps de chaudière sont généralement réalisés chacun par emboutissage d'une tôle, et la résistance de chauffage présente la forme d'un serpentin qui est monté plongeant à l'intérieur de la chambre en entourant le tube d'alimentation en eau et la conduite d'évacuation de l'eau, et qui est relié à des bornes de raccordement électrique traversant chacune la paroi supérieure du chapeau du corps de la chaudière. Le montage d'une telle résistance électrique plongeante est particulièrement difficile et long à effectuer, ce qui augmente notablement le coût de fabrication de la chaudière. De plus, cette résistance plongeante est toujours sujette à un entartrage, nuisant au bon fonctionnement de la chaudière.

Par le document EP-A-0 622 041 qui a fait l'objet d'une demande prioritaire déposée antérieurement mais publiée postérieurement au dépôt prioritaire de la présente demande, on connait une chaudière du type défini ci-dessus, utilisée dans une cafetière "espresso", dans laquelle le chapeau et la coupelle du corps sont logés respectivement dans deux demi-boîtiers dont le demi-boîtier supérieur présente une paroi latérale dans laquelle est ménagée une gorge annulaire logeant la résistance de chauffage, laquelle est maintenue en place par une pièce annulaire dont la partie inférieure est montée dans le rebord annulaire en forme de gouttière du chapeau du corps de chaudière. Cette conception de la chaudière est relativement complexe car elle fait appel à plusieurs pièces supplémentaires, notamment pour le montage de la résistance de chauffage qui est difficile à effectuer, d'où une augmentation du coût de fabrication de la chaudière.

L'invention a pour but de remédier à ces inconvénients et de réaliser une chaudière pour cafetière "espresso", du type exposée ci-dessus, qui soit fiable et économique avec un montage particulièrement aisé de la résistance de chauffage.

Selon l'invention, la résistance électrique de chauffage est montée en contact thermique intime dans la gouttière.

Ainsi, l'invention met judicieusement à profit la réalisation par emboutissage du chapeau du corps métallique de la chaudière pour former à faible coût la gouttière périphérique et y positionner, d'une manière simple, la résistance de chauffage, laquelle est donc désormais plaquée sur le pourtour externe du corps de la chaudière, à la base du chapeau dudit corps, et ce en obtenant une très bonne conduction thermique directe entre la résistance chauffante et le corps de la chaudière. De plus, une telle simplicité de montage de la résistance de chauffage est bien adaptée à une fabrication automatique en grande série.

Selon une autre caractéristique avantageuse de l'invention, le chapeau du corps est réalisé en un matériau bimétallique de bonne conductibilité thermique, tandis que la coupelle du corps est réalisée en acier inoxydable. L'utilisation d'un matériau bimétallique, tel que de préférence de l'acier inoxydable et de l'aluminium, constituant entre autres la gouttière périphérique du chapeau dans laquelle est encastrée la résistance de chauffage, permet d'obtenir une excellente conduction thermique entre la résistance chauffante et le corps de la chaudière et donc de produire une eau chaude à une température idéale pour l'obtention d'un très bon café.

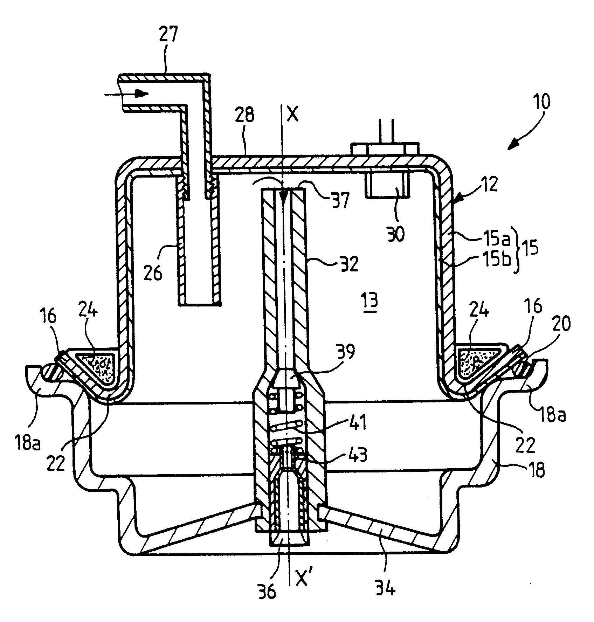

Les caractéristiques et avantages de l'invention ressortiront d'ailleurs de la description qui va suivre, à titre d'exemple non limitatif, en référence au dessin annexé dont la figure unique est une vue en coupe verticale d'une chaudière pour cafetière "espresso" selon l'invention.

Dans l'exemple de réalisation représenté sur la figure, on a désigné en 10 une chaudière conforme à l'invention et destinée à être montée sur une machine à café du type "espresso". Cette chaudière 10 comprend un corps métallique 12, d'axe de symétrie vertical XX', délimitant une chambre à eau de faible volume 13 et comportant une partie supérieure formant un chapeau cylindrique 15 à rebord périphérique 16, en tôle mince emboutie, et une partie inférieure formant une coupelle 18, également en tôle mince emboutie, dont le bord supérieur 18a est lié au rebord 16 du chapeau par tout procédé d'assemblage approprié, tel que par exemple un pressage à force. Un joint externe d'étanchéité 20 est monté pincé entre les extrémités respectives du rebord 16 du chapeau 15 et du bord 18a de la coupelle 18 du corps de la chaudière.

Selon l'invention, le rebord périphérique 16 du chapeau 15 du corps de la chaudière est conformé en une gouttière, désignée en 22 sur la figure, dans laquelle est positionnée en liaison thermique intime une résistance électrique de chauffage 24 destinée à chauffer l'eau admise dans la chambre 13 et réalisée présentement sous la forme d'une résistance tubulaire blindée, initialement de section ronde ou ovale. Par son emplacement à la base du chapeau 15 du corps de la chaudière, la résistance chauffante 24 assure une température homogène de l'eau par mélange naturel.

Dans l'exemple de réalisation représenté sur la figure, la résistance chauffante 24, une fois positionnée dans la gouttière 22, est fixée par sertissage dans la gouttière, permettant ainsi d'obtenir un très bon contact mécanique et thermique entre la résistance chauffante 24 et le corps 12 de la chaudière.

Selon une variante d'exécution, non représentée, la résistance chauffante 24 est fixée par soudage dans la gouttière 22.

Comme le montre la figure, la chaudière 10 comprend de plus un tube vertical d'alimentation en eau 26 qui est monté plongeant dans la chambre 13, sur une faible profondeur de celle-ci, et qui est disposé latéralement par rapport à l'axe XX' du corps 12 de la chaudière. Ce tube 26 est relié à une pompe d'alimentation externe (non représentée) par un tube coudé 27 traversant la paroi supérieure 28 du chapeau 15 ; dans cet exemple, le tube 26 est assemblé au tube coudé 27 au moyen d'une fixation par filetage.

On a représenté schématiquement en 30 sur la figure un thermostat, de structure connue en soi, qui est enchâssé présentement dans la paroi supérieure 28 du chapeau 15, du côté opposé au tube d'alimentation en eau 26 par rapport à l'axe XX' du corps 12, et qui est destiné à contrôler la température de l'eau admise dans la chambre 13 par le tube 26.

La chaudière 10 comprend également une conduite d'évacuation de l'eau 32 qui est placée verticalement dans la chambre 13 en étant axée sur l'axe XX' du corps 12 et qui traverse le fond 34 de la coupelle 18 en y étant fixée par tout moyen de fixation approprié. La conduite 32 présente à son extrémité inférieure un débouché 36 faisant office d'orifice d'écoulement au-dessous duquel est placé un porte-filtre (non représenté) monté d'une manière connue en soi sur la cafetière "espresso" et contenant une dose de mouture de café. L'extrémité supérieure 37 de cette conduite 32 est située à proximité de la paroi supérieure 28 du chapeau 15 du corps de la chaudière.

A l'intérieur de la conduite d'évacuation de l'eau 32 est logé une soupape ou clapet conique taré 39 dont le siège est formé par une section conique interne de la conduite 32 et qui est adapté à autoriser l'écoulement de l'eau chaude hors de la conduite uniquement lorsque la pression de l'eau dans la chambre 13 dépasse un seuil donné. A cet effet, un ressort de compression 41 est monté en appui entre le clapet 39 et une pièce cylindrique tubulaire 43 qui est montée coaxialement à l'intérieur de la conduite 32 et dont l'extrémité inférieure débouche directement dans l'orifice d'écoulement 36 de la conduite 32. De préférence, la pièce tubulaire 36 est réalisée sous la forme d'une vis perforée comportant un filet hélicoïdal périphérique servant, d'une part, à sa fixation dans la conduite 32, et d'autre part, au réglage de la tension du ressort 41.

Comme on l'a mentionné plus haut, le chapeau 15 et la coupelle 18 du corps 12 de la chaudière sont des pièces en tôle mince emboutie, par exemple de même épaisseur de 1,5 millimètre. Selon une caractéristique de l'invention, la coupelle 18 est réalisée en acier inoxydable, tandis que le chapeau 15 est quant à lui réalisé en un matériau bimétallique de bonne conductibilité thermique, tel que de l'aluminium et de l'acier inoxydable, obtenu par une technique classique de laminage. Comme représenté sur la figure, le chapeau 15 présente à cet effet une face externe 15a en aluminium, par exemple d'épaisseur égale à 1 millimètre, en contact mécanique et thermique avec la résistance chauffante 24, et une face interne 15b en acier inoxydable, par exemple d'épaisseur égale à 0,5 millimètre, en contact thermique avec l'eau admise dans la chambre 13.

L'utilisation de ce matériau bimétallique, et notamment de l'aluminium, constituant le chapeau 15 du corps de la chaudière permet d'assurer une excellente conduction thermique, d'une part, entre la résistance chauffante 24 et le corps 12 de façon à obtenir rapidement de l'eau chaude, et d'autre part, entre la résistance chauffante 24, le corps 12 et le thermostat approprié 30 de façon à avoir une coupure et un réenclenchement du thermostat qui s'effectuent à une température idéale pour l'obtention d'un bon café.

L'emplacement de la résistance chauffante 24 pratiquement dans la zone médiane de la chambre 13, sous le niveau du débouché du tube 26 et à distance du thermostat 30, assure une température homogène de l'eau en circulation dans la chambre 13.

De plus, l'utilisation d'acier inoxydable comme revêtement interne 15b du chapeau 15 du corps de la chaudière permet de s'affranchir de toute migration d'aluminium dans l'eau qui, comme cela est bien connu, risque à partir d'une certaine quantité diffusée de nuire gravement à la santé du consommateur.

Le fonctionnement de la chaudière 10 pour cafetière "espresso" conforme à l'invention et décrite ci-dessus est le suivant.

La pompe raccordée sur le tube d'arrivée d'eau 27 injecte de l'eau froide sous pression par le tube vertical d'alimentation 26 et, simultanément, la résistance électrique 24 est alimentée de façon à chauffer l'eau admise dans la chambre 13. Lorsque la chambre 13 est remplie d'eau jusqu'à un niveau supérieur à celui de l'extrémité supérieure 37 de la conduite verticale d'évacuation 32 et lorsque la température de l'eau est suffisamment élevée, la pression régnant dans la chambre 13 écarte le clapet 39 de son siège , en comprimant le ressort 41, pour laisser passer l'eau chaude qui sort alors de la chaudière par l'orifice d'écoulement 36 en vue d'arriver sur la mouture de café contenue dans le porte-filtre de la cafetière "espresso".

## Revendications

1. Chaudière pour machine à café du type "espresso", comportant un corps métallique (12) qui définit une chambre (13) et qui comprend une partie supérieure formant un chapeau (15) à rebord périphérique (16) conformé en une gouttière (22) et une partie inférieure formant une coupelle (18) qui est liée de manière étanche au rebord périphérique (16) du chapeau, un tube d'alimentation en eau (26) qui est monté plongeant dans la chambre (13) en étant solidaire du chapeau (15) du corps (12) et qui est relié à une pompe d'alimentation externe, une résistance électrique de chauffage (24) destinée à chauffer l'eau admise dans la chambre (13) par ledit tube (26), une conduite d'évacuation de l'eau (32) qui est disposée verticalement dans la chambre (13) en étant solidaire du fond (34) de la coupelle (18) du corps (12) et dont l'extrémité inférieure débouche du fond (34) de la coupelle (18), et une soupape (39) qui est logée dans la conduite d'évacuation de l'eau (32) et qui est adaptée à autoriser l'écoulement de l'eau chaude hors de ladite conduite (32) uniquement lorsque la pression de l'eau dans la chambre (13) dépasse un seuil donné,
**caractérisée en ce que** la résistance électrique de chauffage (24) est montée en contact thermique intime dans la gouttière (22).

2. Chaudière selon la revendication 1,
**caractérisée en ce que** la résistance électrique de chauffage (24) est sertie dans la gouttière (22).

3. Chaudière selon la revendication 1,
**caractérisée en ce que** la résistance électrique de chauffage (24) est soudée dans la gouttière (22).

4. Chaudière selon l'une quelconque des revendications précédentes,
**caractérisée en ce que** le chapeau (15) et la coupelle (18) du corps (12) étant des pièces en tôle mince emboutie, le chapeau (15) du corps est réalisé en un matériau bimétallique de bonne conductibilité thermique, tandis que la coupelle (18) du corps est réalisée en acier inoxydable.

5. Chaudière selon la revendication 4,
**caractérisée en ce que** le matériau bimétallique est composé d'aluminium et d'acier inoxydable, l'aluminium constituant la face externe (15a) du chapeau (15) du corps.

6. Chaudière selon la revendication 4 ou 5,
**caractérisée en ce que** le matériau bimétallique est obtenu par laminage.

7. Chaudière selon l'une quelconque des revendications précédentes,
**caractérisée en ce que** le corps (12) présentant un axe de symétrie vertical (XX'), la conduite verticale d'évacuation de l'eau (32) est axée sur l'axe (XX') dudit corps (12), tandis que le tube d'alimentation en eau (26) plonge verticalement dans la chambre (13), sur une faible profondeur de celle-ci, à partir de la paroi supérieure (28) du chapeau (15) du corps, l'extrémité supérieure (37) de ladite conduite d'évacuation de l'eau (32) étant située à proximité de la paroi supérieure (28) du chapeau (15) du corps.

8. Chaudière selon l'une quelconque des revendications précédentes,
**caractérisée en ce que** la résistance électrique de chauffage (24) est une résistance tubulaire blindée.

## Claims

1. Boiler for a coffee machine of the "espresso" type, comprising a metallic body (12) which defines a chamber (13) and which comprises an upper portion forming a cover (15) with a peripheral flange (16) shaped as a gutter (22) and a lower portion forming a cup (18) which is connected in a sealed manner to the peripheral flange (16) of the cover, a water supply tube (26) which is mounted to extend down into the chamber (13) secured to the cover (15) of the body (12) and which is connected to an external supply pump, an electric heating resistance (24) adapted to heat the water admitted into the chamber (13) by said tube (26), a water outlet conduit (32) which is disposed vertically in the chamber (13) secured to the bottom (34) of the cup (18) of the body (12) and whose lower end opens through the bottom (34) of the cup (18), and a valve (39) which is disposed in the water outlet conduit (32) and which is adapted to permit the flow of hot water from said conduit (32) when the pressure of the water in the chamber (13) exceeds a given threshold,
**characterized in that** the electric heating resistance (24) is mounted in intimate thermal contact in the gutter (22).

2. Boiler according to claim 1,
**characterized in that** the electric heating resistance (24) is crimped into the gutter (22).

3. Boiler according to claim 1,
**characterized in that** the electric heating resistance (24) is welded in the gutter (22).

4. Boiler according to any one of the preceding claims,
**characterized in that** the cover (15) and the cup (18) of the body (12) being pieces of thin stamped steel, the cover (15) of the body is of a bimetallic material of good thermal conductivity, while the cup (18) of the body is of stainless steel.

5. Boiler according to claim 4
**characterized in that** the bimetallic material is comprised of aluminium and stainless steel, the aluminium constituting the external surface (15a) of the cover (15) of the body.

6. Boiler according to claim 4 or 5,
**characterized in that** the bimetallic material is produced by lamination.

7. Boiler according to any one of the preceding claims,
**characterized in that** the body (12) having a vertical axis (XX') of symmetry, the vertical water outlet conduit (32) is coaxial with the axis (XX') of said body (12), while the water supply tube (26) extends vertically down into the chamber (13), over a short depth of this latter, from the upper wall (28) of the cover (15) of the body, the upper end (37) of said water outlet conduit (32) being located adjacent the upper wall (28) of the cover (15) of the body.

8. Boiler according to any one of the preceding claims,
**characterized in that** the electric heating resistance (24) is an armored tubular resistance.

## Patentansprüche

1. Heißwasserbereiter für Espresso-Kaffeemaschinen mit einem Körper (12) aus Metall, der eine Kammer (13) definiert und einen oberen Bereich, der eine Haube (15) mit einem zu einer Rinne (22) geformtem Umfangsrand (16) bildet, und einen unteren Bereich aufweist, der eine Schale (18) bildet und dicht mit dem Umfangsrand (16) der Haube verbunden ist, einem Wasserversorgungsrohr (26), das in die Kammer (13) eintaucht, mit der Haube (15) des Körpers (12) fest verbunden ist und mit einer externen Versorgungspumpe verbunden ist, einem elektrischen Heizwiderstand (24) zum Erhitzen des durch das Rohr (26) in die Kammer (13) eingeleiteten Wassers, einer Wasserausflußleitung (32), die vertikal in der Kammer (13) angeordnet und dabei mit dem Boden (34) der Schale (18) des Körpers (12) fest verbunden ist, und deren unteres Ende aus der Schale (18) heraustritt, und einem in der Wasserausflußleitung (32) angeordneten Ventil (39), welches das Herausfließen des heißen Wassers aus dieser Leitung (32) nur dann ermöglicht, wenn der Wasserdruck in der Kammer (13) einen bestimmten Schwellenwert übersteigt,
**dadurch gekennzeichnet, daß** der elektrische Heizwiderstand (24) in innigem Wärmekontakt in der Rinne (22) angeordnet ist.

2. Heißwasserbereiter nach Anspruch 1,
**dadurch gekennzeichnet, daß** der elektrische Heizwiderstand (24) in die Rinne (22) eingebördelt ist.

3. Heißwasserbereiter nach Anspruch 1,
**dadurch gekennzeichnet, daß** der elektrische Heizwiderstand (24) in die Rinne (22) angelötet oder angeschweißt ist.

4. Heißwasserbereiter nach einem der vorhergehenden Ansprüche,
**dadurch gekennzeichnet, daß** die Haube (15) und die Schale (18) des Körpers (12) Teile aus dünnem tiefgezogenen Blech sind und die Haube (15) des Körpers aus einem bimetallischen Material mit guter Wärmeleitfähigkeit besteht, wohingegen die Schale (18) des Körpers aus Edelstahl ist.

5. Heißwasserbereiter nach Anspruch 4,
**dadurch gekennzeichnet, daß** das bimetallische Material aus Aluminium und Edelstahl besteht, wobei das Aluminium die außere Fläche (15a) der Haube (15) des Körpers bildet.

6. Heißwasserbereiter nach Anspruch 4 oder 5,
**dadurch gekennzeichnet, daß** das bimetallische Material durch Laminieren erhalten wurde.

7. Heißwasserbereiter nach einem der vorhergehenden Ansprüche,
**dadurch gekennzeichnet, daß** der Körper (12) eine vertikale Symmetrie-Achse (XX') aufweist und die vertikale Wasserausflußleitung (32) in der Achse (XX') des Körpers (12) verläuft, während das Wasserversorgungsrohr (26) vertikal von der oberen Wand (28) der Haube (15) aus über eine geringe Strecke in die Kammer (13) eintaucht, wobei das obere Ende (37) der Wasserausflußleitung (32) nahe der oberen Wand (28) der Haube (15) des Körpers angeordnet ist.

8. Heißwasserbereiter nach einem der vorhergehenden Ansprüche,
**dadurch gekennzeichnet, daß** der elektrische Heizwiderstand (24) ein ummantelter rohrförmiger Widerstand ist.
